# EUROPÄISCHE PATENTSCHRIFT

(11) **EP 0 505 518 B1**
(45) Veröffentlichungstag und Bekanntmachung des Hinweises auf die Patenterteilung: **01.02.1995**
(21) Anmeldenummer: 91914794.2
(22) Anmeldetag: 22.08.1991
(51) Int. Cl.: B01D 25/133, B01D 25/176

(54) **FILTERPLATTE FÜR EINE PLATTENFILTERPRESSE**
FILTER PLATE FOR A PLATE FILTER PRESS
PLATEAU FILTRANT POUR UN FILTRE-PRESSE A PLATEAUX

(30) Priorität: 17.10.1990 DE 4032937
(43) Veröffentlichungstag der Anmeldung: 30.09.1992
(73) Patentinhaber: Eberhard Hoesch & Söhne GmbH Verfahrens- und Anlagentechnik, D-52477 Alsdorf (DE)
(72) Erfinder: BONN, Heinz, D-5166 Kreuzau-Winden (DE)
(74) Vertreter: Langmaack, Jürgen, Dipl.-Ing.
(86) Internationale Anmeldenummer: EP9101594
(87) Internationale Veröffentlichungsnummer: WO9206760

(56) Entgegenhaltungen:
- DE-A- 2 324 875
- DE-A- 3 540 786
- DE-U- 8 512 696
- DE-U- 8 704 934
- FR-A- 2 589 080
- GB-A- 2 176 418

## Beschreibung

Die Erfindung betrifft eine Filterplatte für eine Plattenfilterpresse entsprechend dem Oberbegriff des Anspruchs 1.

Derartige Filterplatten mit Preßmembran sind grundsätzlich in der Praxis bekannt. Ein Problem stellt hierbei die Verbindung zwischen Preßmembran und Plattenkörper dar, weil während des Preßvorgang ein Druckmittel zwischen Plattenkörper und Preßmembran eingeführt wird, durch das die Preßmembran vom Plattenkörper abgehoben wird. Während die Preßmembran selbst im Randbereich der Filterplatte auch durch den Schließdruck an der Filterplatte gehalten wird, stellt die Festlegung im Bereich der Durchtrittsöffnung, insbesondere im Bereich des Trübekanals ein Problem dar. Die Befestigung in diesem Bereich erfolgte in der Praxis bisher beispielsweise durch einfaches Verkleben oder Vulkanisation der Ränder der Preßmembran mit dem Plattenkörper. Das Verkleben ist jedoch nicht sehr zuverlässig, weil beim Preßvorgang starke Scherkräfte auftreten, durch die die Klebeverbindung gelöst werden kann, zumal im Gegensatz zur Befestigung der Membranränder am äußeren Plattenrand die Preßmembran mit dem Plattenkörper im Bereich des Trübeeintritts nicht durch die Schließkraft der Presse unterstützt wird, so daß die Klebeverbindung in diesem Bereich einer starken Belastung unterworfen ist.

Aus der DE-C-2.324.876 und der DE-A-3.540.786 ist es nun bekannt, die Durchtrittsbohrung der mit Preßmembranen versehenen Filterplatte mit einer im Bereich der Filterplattenmittenebene umlaufenden Nut zu versehen. In diese umlaufende Nut wird der Randwulst der Preßmembran eingelegt und darüber ein geschlitzter Sprengring geschoben. Dieser Sprengring wird dann durch einen geschlossenen Ring als Stützring durch Verrastung gehalten. Eine derartige Befestigung erlaubt keine sehr hohen Preßdrücke. Diese lassen sich dann erreichen, wenn statt des Stützringes eine Befestigung vorgesehen wird, wie sie als sogenannte Tuchverschraubung bekannt ist. Die Einschraubflansche, die durch eine eingeschraubte Gewindebüchse gegeneinander verschraubt werden und hierbei auch das Filtertuch einklemmen, haben sich in der Praxis zwar bewährt, weisen jedoch den Nachteil auf, daß derart ausgerüstete Filterpressen bei der Behandlung von agressiven Trüben nur beschränkt einsatzfähig sind. Eine Druckbeaufschlagung der Preßmembran mit einem Preßdruck bis zu 3 bar ist möglich. Bei der Verwendung höherer Drücke besteht auch hier die Gefahr, daß die Preßmembran aus ihrer Verankerung herausgezogen wird.

Aus der DE-U-87 04 934 ist eine Filterplatte entsprechend dem Oberbegriff des Anspruchs bekannt, bei der die Durchtrittsöffnung einen umlaufenden Kragen aufweist, gegen den der die Durchtrittsöffnung der Preßmembran begrenzende Randwulst über ein am Außenumfang konisch geformtes Befestigungselement in Form eines Klemmringes formschlüssig gehalten wird. Der Formschluß wird hierbei dadurch gebildet, daß der die Durchtrittsöffnung der Filterplatte begrenzende und gegen die Durchtrittsöffnung konisch zulaufende Wulst der Filterplatte einerseits und die Neigung des konischen Befestigungsringes jeweils in ihrer Neigung unterschiedlich sind, so daß beide nach außen hin aufeinanderzulaufen und den Formschluß für den entsprechend geformten Randwulst der Preßmembran bilden. Der Nachteil dieser Anordnung besteht darin, daß bei einer Druckbeaufschlagung der Preßmembran mit dem Preßmittel die auf den Randwulst der Preßmembran wirkenden Zugkräfte zu einem erheblichen Teil auch von dem ringförmigen Befestigungselement selbst und den zugehörigen Befestigungsschrauben aufgenommen werden müssen, so daß hier entsprechend hohe Beanspruchungen dieser Bauteile aufzunehmen sind.

Der Erfindung liegt nun die Aufgabe zugrunde, eine Filterplatte der eingangs bezeichneten Art zu schaffen, die eine sichere Verankerung der Preßmembran im Bereich der Durchtrittsöffnungen im Plattenkörper auch bei hoher Druckbeaufschlagung gewährleistet und auch die Verwendung von die Preßmembran abdeckenden Filtertüchern ermöglicht.

Diese Aufgabe wird gemäß der Erfindung mit den im Kennzeichnungsteil des Anspruchs 1 angegebenen Merkmale gelöst. Eine derartige Anordnung hat den Vorteil, daß über den Klemmring der Rand der Durchtrittsöffnung der Preßmembran mit einer definierten Preßkraft verspannbar ist, wobei durch die besondere Ausrichtung der Nut zusätzlich zu der reibschlüssigen auch noch eine Verbesserung der formschlüssigen Verankerung des Randbereichs der Durchtrittsöffnung der Preßmembran erzielt wird. Eine derartige Ausgestaltung bietet die Möglichkeit der Beaufschlagung mit Drücken bis zu zu 15 bar, so daß sich erhebliche Leistungssteigerungen erzielen lassen. Bei Filterplatten, die auf beiden Seiten mit Preßmembranen versehen sind, können die spiegelsymmetrisch zueinander angeordneten Klemmringe über einfache Schraubenbolzen miteinander verbunden sein.

In einer bevorzugten Ausgestaltung der Erfindung ist vorgesehen, daß die Filterplatte im Bereich ihrer Mittelebene mit einem die Nut zur Mitte der Durchtrittsöffnung der Filterplatte hin überragenden, umlaufenden Haltesteg versehen ist, mit dem der Klemmring verspannbar ist. Diese Anordnung hat den Vorteil, daß der Klemmring in Richtung der Achse der Durchtrittsöffnung mechanisch unmittelbar an der Filterplatte sich abstützen kann und damit, insbesondere bei Filterplatten mit beidseitig angeordneten Preßmembranen, die durch die Klemmringe zu beiden Seiten begrenzte Durchtrittsöffnung bei entsprechender Ausgestaltung während des Betriebes auch durch hohe axial wirkende Kräfte belastbar ist, ohne daß damit der Randwulst der Preßmembran überpreßt wird. Bevorzugt ist hierbei die Kante der Durchtrittsöffnung der Filterplatte im Bereich ihres größen Durchmessers abgerundet ausgebildet. Diese Abrundung bringt eine einwandfreie Anlage der Preßmembran während des Filtrationsbetriebes. Beim Fressen, d.h. also, wenn die Preßmembran von der Rückseite her mit einem Druckmittel beaufschlagt wird, stülpt sich die Preßmembran in diesem Bereich lediglich um, so daß die Preßmembran in diesem Bereich praktisch nicht gedehnt wird.

Für eine aus Kunststoff gefertigte Filterplatte, wie sie insbesondere für agressive oder korrosive Medien eingesetzt werden muß, ist gemäß der Erfindung ferner vorgesehen, daß der Klemmring ebenfalls aus Kunststoff hergestellt ist und mit mehreren axialen Durchtrittsbohrungen für Spannschrauben versehen ist und daß im Haltesteg der Filterplatte Gewindehülsen, vorzugsweise aus Metall als Gegenelement zu den Spannschrauben angeordnet sind. Da bei dieser Ausführungsform, bis auf die Spannschrauben und die Gewindehülse, alle Teile aus chemisch beständigem Kunststoff gefertigt sind, lassen sich die Spannschrauben und die in der Filterplatte angeordneten Gewindehülsen aus Metall einwandfrei gegenüber den trübe- bzw. filtratführenden Bereich der Filterpresse abdichten. Bei Filterplatten, die auf beiden Seiten mit Preßmembranen versehen sind, kann eine Gewindehülse jeweils für die Spannschrauben beider Plattenseiten verwendet werden, so daß die Spannkräfte unmittelbar zwischen den beiden Klemmringen wirken und somit die Gewindehülsen nicht fest im Kunststoffmaterial der Filterplatte verankert werden müssen.

In vorteilhafter Ausgestaltung der Erfindung ist hierbei vorgesehen, daß in die Durchtrittsbohrungen im Klemmring an ihren außenliegenden Enden bei eingesetzter Spannschraube jeweils ein Stopfen aus einem elastomeren Material eingesetzt ist. Durch diesen Stopfen, der zweckmäßigerweise im Durchmesser ein Übermaß in bezug auf den Durchmesser der Durchtrittsbohrung für die Schrauben aufweist und damit als Preßdichtung eingesetzt werden kann, ist sichergestellt, daß die Schraube gegenüber den trübeführenden Bereichen einwandfrei abgedichtet ist.

In vorteilhafter Ausgestaltung der Erfindung ist vorgesehen, daß die Wandung der Durchtrittsöffnung und der Klemmring mit einer Schlauchmanschette aus einem elastomeren Material abgedeckt sind, die an beiden Enden mit radial nach außen weisenden Deckflanschen versehen ist, die bis in den Bereich der Filterkammern hineinragt. Damit ergibt sich eine zusätzliche Abdichtung des Befestigungsbereiches gegenüber dem durch die Durchtrittsbohrung in der Filterplatte definierten Trübekanal bis in die Filterkammern hinein.

In bevorzugter weiterer Ausgestaltung der Erfindung ist vorgesehen, daß das Filtertuch im Bereich der Durchtrittsöffnung mit den Deckflanschen der Schlauchmanschette verbunden ist. Die Verbindung kann hierbei durch Verkleben, insbesondere aber auch durch Vernähen erfolgen. Da die Schlauchmanschette mit ihren Deckflanschen als Gummiformteil hergestellt werden kann, ergibt sich hierbei die Möglichkeit, die Deckflansche im Bereich ihrer freien Kante so zu formen, daß sie im Übergangsbereich vom Rand der Durchtrittsöffnung zur Filterkammer hin elastisch federnd an der darunterliegenden Preßmembran anliegen.

In weiterer vorteilhafter Ausgestaltung der Erfindung ist vorgesehen, daß die Deckflansche der Schlauchmanschette auf ihrer Außenfläche mit polsterförmigen Erhöhungen versehen sind, die bei zum Paket zusammengeschobenen Filterplatten jeweils auf der Außenfläche von höckerartigen Erhöhungen von Befestigungsringen für das Filtertuch der Nachbarplatten anliegen, in denen die Durchgangslöcher für deren Befestigungsschrauben angeordnet sind. Diese Anordnung hat den Vorteil, daß die Aufnahmebohrungen für die Befestigungsschrauben, die zweckmäßigerweise ebenfalls durch einen Stopfen aus einem elastomeren Material abgeschlossen sind, zusätzlich noch durch die polsterförmigen Erhöhungen der Schlauchmanschette der Nachbarplatte überdeckt sind, so daß infolge der auch in diesem Bereich wirksamen Axialkräfte der die Spannschraube des Befestigungsringes abdichtende Gummistopfen zusätzlich von einer Preßdichtung überdeckt ist.

In Ausgestaltung der Erfindung ist ferner vorgesehen, daß der Klemmring für die Preßmembran und/oder der Befestigungsring für das Filtertuch einer membranlosen Filterplatte an der zugehörigen Filterplatte auf einer Zwischenlage aus einem elastomeren Material aufliegen. Diese Zwischenlage aus elastomerem Material, die durch die Anpreßkraft der Spannschrauben verpreßt wird, bewirkt eine einwandfreie Abdichtung der Schraubenlöcher und der eingesetzten Gewindehülse auch in diesem Bereich, so daß keine Korrosion auftreten kann.

Die Verwendung von Ringen zur Klemmung der Preßmembran und/oder zur Festlegung des Filtertuchs an der Filterplatte, die über mehrere auf den Umfang verteilte Spannschrauben an der Filterplatte festgelegt werden, ergibt insgesamt den besonderen Vorteil, daß auch bei der Behandlung von nicht agressiven Trüben die Lösbarkeit dieser Elemente durch Ablagerungen und Verkrustungen nicht beeinträchtig wird, wie dies bei der Verwendung der aus dem Stand der Technik bekannten rohrförmige Spannhülsen der Fall ist. Schon durch die Verwendung der Verschlußstopfen für die Abdeckung der Schraubenköpfe ist sichergestellt, daß für das Auswechseln der Preßmembran und/oder des Filtertuchs nach dem Herausnehmen der Verschlußstopfen die Schrauben, in der Regel Innen-Sechskant-Schrauben, sofort frei zugänglich sind. Da infolge der Abdichtung der Schraubenlöcher dann die Klemm- und/oder Befestigungsringe ihrerseits über ringförmige Zwischenlagen aus elastomerem Material auf der jeweils zugehörigen Filterplatte abgestützt sind und somit auch von dieser Seite keine Trübe eintreten kann, ist sichergestellt, daß die Spannschrauben problemlos lösbar sind.

Die Erfindung wird anhand schematischer Zeichnungen eines Ausführungsbeispieles näher erläuter. Es zeigen:
- Fig. 1: einen Vertikalschnitt durch den Bereich des Trübedurchtritts mehrerer zum Paket zusammengeschobener Filterplatten,

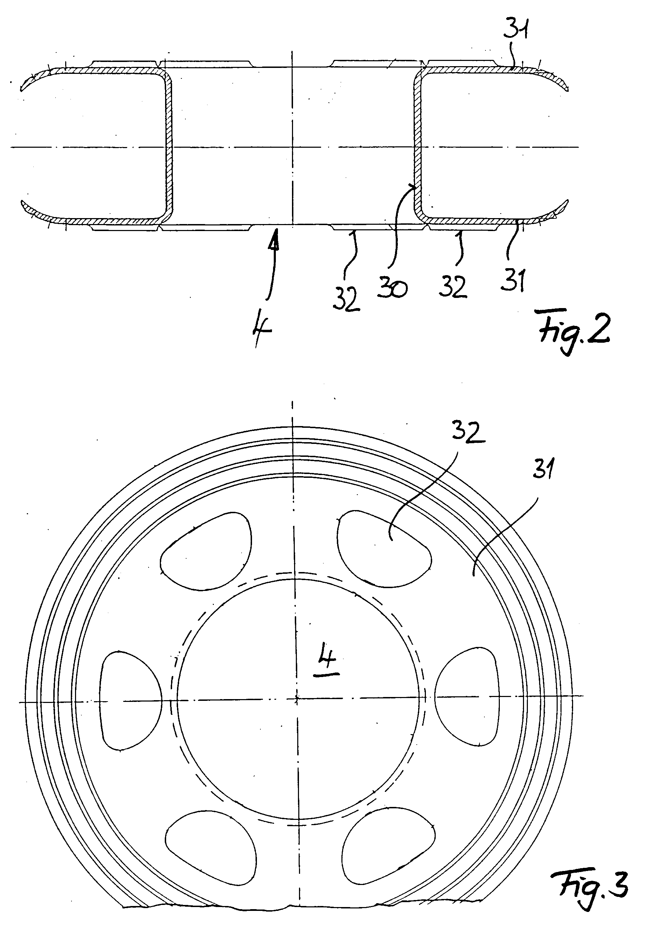

- Fig. 2: einen Vertikalschnitt durch eine Schlauchmanschette,
- Fig. 3: eine Aufsicht auf die Schlauchmanschette gem. Fig. 2,
- Fig. 4: eine Aufsicht auf einen Befestigungsring für einen membranlose Filterplatte,
- Fig. 5: einen Teilschnitt gem. der Linie V-V in Fig. 4 durch einen Befestigungsring.

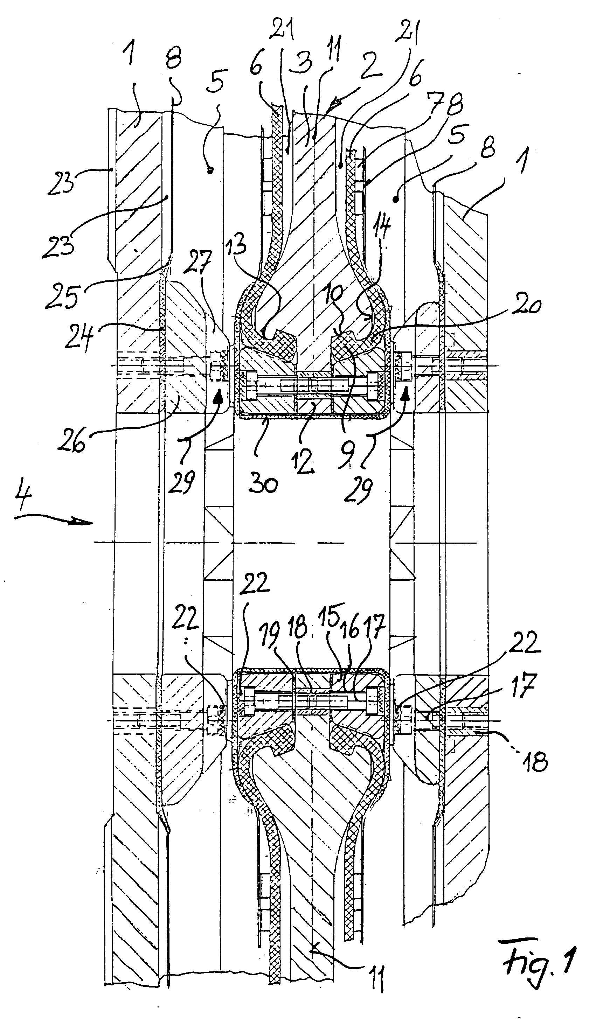

In dem Teillängsschnitt gem. Fig. 1 ist der Bereich des Trübedurchtritts einer zum Paket zusammengeschobenen Filterplattenanordnung dargestellt, die abwechselnd aus einer Kammerfilterplatte 1 und einer Membrankammerfilterplatte 2 gebildet ist. Im folgenden werden beide nur noch als Filterplatten bezeichnet und durch ihre Bezugszeichen unterschieden. Bei einer rechteckigen, quadratischen oder runden Filterplatte weist diese in der Regel in der Plattenmitte eine Trübedurchtrittsöffnung 4 auf, so daß bei zum Paket zusammengeschobenen Filterplatten die Folge der Durchtrittsöffnungen 4 der aufeinanderfolgenden Filterplatten den Trübekanal bildet, von dem aus dann die Trübe in die einzelnen zwischen den Platten liegenden Filterkammern 5 fortlaufend eintreten kann.

Bei der Filterplatte 2 ist die Herzplatte 3 zu beiden Seiten mit einer Preßmembran 6 belegt, die auf ihrer der Filterkammer 5 zugekehrten Seite mit einer Vielzahl von Noppen 7 versehen ist. Auf dieser Preßmembran liegt ein Filtertuch 8 auf, das sich auf den Noppen 7 abstützt. Die Preßmembran 6 ebenso wie das Filtertuch 8 sind im Bereich des die Herzplatte 3 auf der Außenseite umschließenden Rahmens in üblicher, hier nicht interessierender Weise, festgelegt.

Da die Durchtrittsöffnung 4 beispielsweise jeweils in der Mitte der Filterplatten angeordnet ist, weist ebenso wie die Filterplatte auch die Preßmembran 6 und das Filtertuch 8 jeweils eine entsprechende Durchtrittsöffnung auf.

Wie aus Fig. 1 ersichtlich, sind die Preßmembranen 6 der Filterplatte 2 im Bereich ihrer Durchtrittsöffnung mit einem Randwulst 9 versehen. Dieser Randwulst 9 liegt in einer entsprechenden Nut 10 in einem konisch zulaufenden Bereich der Durchtrittsöffnung der Filterplatte 2, die beide von einem im Bereich der Mittelebene 11 der Filterplatte angeordneten, die Nuten 10 zur Mitte der Durchtrittsöffnung 4 hin überragenden Haltesteg 12 begrenzt sind. Der an den konisch verlaufenden Bereich 13 anschließende Kantenbereich 14 ist hierbei abgerundet ausgeführt, so daß sich dieser Bereich der Preßmembran in der gezeigten Filtrationsstellung in der dargestellten Weise an die Filterplatte anschmiegen kann. Wird jedoch der Zwischenraum 21 zwischen Herzplatte 3 und Preßmembran 6 mit einem Druckmittel, beispielsweise Wasser beaufschlagt, stülpt sich die Preßmembran 6 gegen den Filterkuchen in der Filterkammer 5 um, ohne daß die Preßmembran in ihren dem Bereich 14 zugeordneten Teil nennenswert gedehnt wird.

Jeder Randwulst 9 ist nun durch einen auf seinem Außenumfang konisch geformten Klemmring 15 in der Nut 10 gehalten. Der Klemmring 15 weist mehrere auf seinen Umfang verteilte Schraubendurchgangslöcher 16 auf, so daß mit Hilfe von Spannschrauben 17, die in jeweils eine im Haltesteg 12 gehaltene metallische Gewindehülse 18 eingeschraubt sind, die Klemmringe verschraubt werden können. Die Klemmringe 15 liegen nun nicht unmittelbar auf der zugehörigen Fläche des Haltesteges 12 auf, sondern auf einer entsprechend ringförmigen Zwischenlage 19 aus einem elastomeren Material, so daß der Spalt zwischen Klemmring 15 und Haltesteg 12 gegenüber der den Trübekanal bildenden Durchtrittsöffnung abgedichet ist. Der Klemmring 15 ist hierbei über die Spannschraube 17 mit dem Haltesteg 12 fest verspannt. Bei der dargestellten beidseitigen Anordnung von Preßmembranen braucht die Gewindehülse 18 nicht fest in dem Haltesteg 12 der vorzugsweise aus Kunststoff hergestellten Filterplatte verankert zu sein, da bei gleichzeitigem Anzug der Schrauben hier eine feste Verspannung der beiden Klemmringe gegeneinander erreicht werden kann.

Die Verpressung des jeweiligen Randwulstes 9 in der Nut 10 kann hierbei durch eine entsprechende Dimensionierung der Dicke des Randwulstes in radialer Richtung sowie der Dicke des anschließenden Membranbereiches 20 einerseits und dem Außenumfang des konischen Teils des Klemmringes 15 andererseits definiert vorgegeben werden. Da die Klemmringe fest miteinander verspannt sind, wird die Verpressung der die Abdichtung bildenden Randwülste 9 und der Bereiche 20 unabhängig vom Betriebsdruck der Filterpresse und zwar sowohl gegenüber dem Betriebsdruck im Trübekanal als auch gegenüber dem Betriebsdruck des in den Raum 21 hinter der Preßmembran eingedrückten strömungsfähigen Druckmittels bestimmt. Die Verpressung der Bereiche 9 und 20 der Preßmembran ändert sich selbst dann nicht, wenn die einander benachbarten Klemmringe und Befestigungsringe, wie nachstehend noch näher erläuert, fest aufeinanderliegen, so daß hier die Klemm- und Befestigungsringe in Richtung des Trübekanals, d.h. also in axialer Richtung mit erheblichen Kräften beaufschlagt werden.

Die Endbereiche der Schraubenlöcher 16 werden nach dem Eindrehen der Spannschrauben jeweils mit einem Verschlußstopfen 22 aus einem elastomeren Material verschlossen. Der Verschlußstopfen 22 hat hierbei in seinem Durchmesser ein entsprechendes Übermaß, so daß er abdichtend eingesetzt ist.

Damit ist sichergestellt, daß der gesamte Bereich der Schraubendurchgangsbohrung 16 einschließlich der Gewindehülse 18 gegenüber dem Trübekanal durch die dichtenden Zwischenlagen 19 und die Vershlußstopfen 22 hermetisch abgeschlossen ist, so daß ein korrosiver Angriff durch die zu behandelnde Flüssigkeit und die Bildung von Ablagerungen, die den Zugriff zu den Schrauben behindern könnten, vermieden ist.

Die die Filterkammer 5 gegenüber der Filterplatte 2 begrenzende Filterplatte 1 ist lediglich mit einer sogenannten Kannelierung 23 auf beiden Seiten versehen, die bis in den hier nicht näher dargestellten Plattenrand reicht, von diesem aber in axialer Richtung überragt wird. Auf dieser Kannelierung 23 liegt wiederum ein Filtertuch 8 auf, das ebenfalls mit einer entsprechenden Durchtrittsöffnung versehen ist, deren Randbereich durch einen Ring 24 aus einem elastomeren Material gebildet wird. Das Filtertuch 8 ist mit diesem Ring 24 aus elastomerem Material am Außenrand 25 des Ringes vernäht. Über diesen Ring 24 ist das Filtertuch im Bereich der Durchtrittsöffnung 4 mit Hilfe eines Befestigungsringes 26 festgelegt, der wiederum mit Hilfe von Spannschrauben 17 in Gewindehülsen 18 an der Filterplatte 1 festgelegt ist.

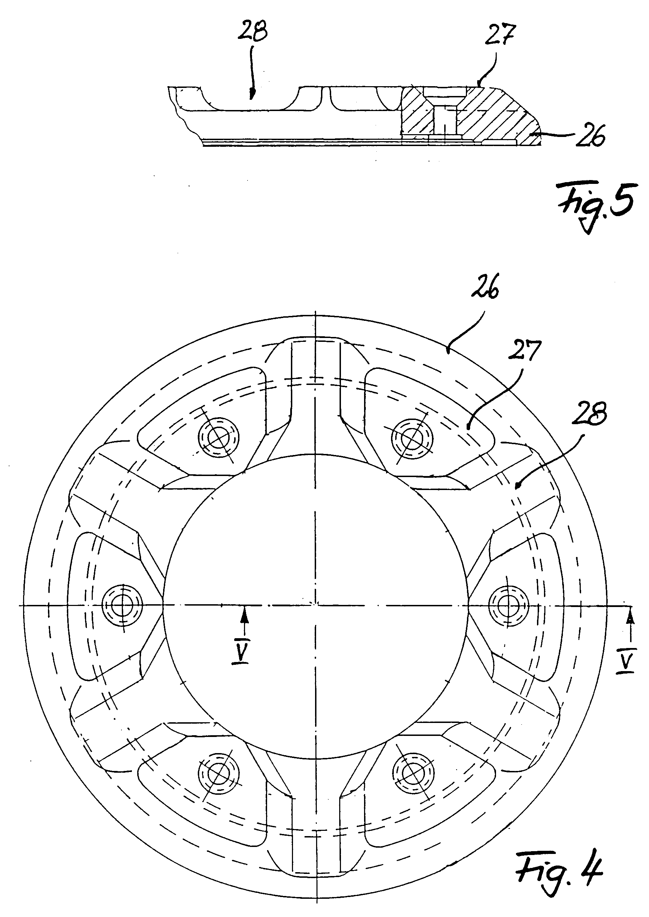

Wie in Fig. 4 in der Aufsicht und in Fig. 5 in einem Teilschnitt dargestellt, ist der Befestigungsring 26 mit mehreren höckerartigen Vorsprüngen 27 versehen, die gegen den Klemmring 15 der benachbarten Filterplatte 2 gerichtet sind. Diese höckerartigen Vorsprünge 27 begrenzen jeweils von der Durchtrittsöffnung ausgehende radiale Strömungskanäle 28, durch die aus dem Trübekanal in die Filterkammer 5 die Trübe eintreten kann (Pfeil 29 in Fig. 1).

Die Spannschrauben 17 zur Festlegung des Befestigungsringes 26 sind wiederum in entsprechenden Schraubenbohrungen 16 angeordnet, die im Bereich der höckerartigen Vorsprünge 27 verlaufen und die zur Außenseite hin über einen Stopfen 22 aus einem elastomeren Material abgedeckt sind.

Die Wandung der Durchtrittsöffnung 4 und die Klemmringe 15 der Filterplatte 1 sind mit einer Schlauchmanschette 30 aus einem elastomeren Material abgedeckt, die an beiden Enden mit radial nach außen weisenden Deckflanschen 31 versehen ist. Mit den freien Kanten der Deckflansche 31 ist dann das Filtertuch 8 beispielsweise durch Vernähen verbunden.

Auf der in der Ebene der Filterplatte 2 liegenden Fläche der Deckflanschen 31 ist eine Mehrzahl von höckerartigen Erhöhungen 32 angeordnet, die in bezug auf ihre Positonierung auf der Filterplatte durch die Verbindung mit dem Filtertuch fixiert sind. Diese höckerartigen Vorsprünge 32 sind hierbei so positioniert, daß sie den ebenfalls durch die Zuordnung auf der Filterplatte 2 exakt positionierten Spannschrauben 17 für die Befestigungringe 26 gegenüberliegen und hierbei die Schraubendurchgangslöcher der Befestigungsringe 26 abdecken. Da auch die höckerartigen Vorsprünge aus elastomerem Material bestehen und nur den entsprechenden höckerartigen Vorsprüngen 27 gegenüberliegen, werden die Schraubenköpfe der Befestigungsringe 26 bei zusammengefahrenem Filterplattenpaket und der damit verbundenen Verpressung der höckerartigen Erhöhungen 32 an den Deckflanschen auch bei höchster Druckbeaufschlagung zuverlässig abgedichtet. Die Schraubendurchgangslöcher 16 in den Klemmringen 15 werden ihrerseits durch die Deckflansche der Schlauchmanschette 30 abgedeckt.

## Patentansprüche

1. Filterplatte für eine Plattenfilterpresse mit wenigstens einer mit Filtertuch (8) abgedeckten Preßmembran (6), bei der die Filterplatte und die Preßmembran wenigstens eine gemeinsame Durchtrittsöffnung (4) aufweisen, wobei der Rand der Durchtrittsöffnung der Filterplatte auf der die Preßmembran tragenden Seite zur Mittelebene (11) der Filterplatte hin konisch zulaufend ausgebildet ist, und der Rand der Durchtrittsöffnung der Preßmembran mit einem umlaufenden Randwulst (9) versehen ist, der durch ein ringförmiges, am Außenumfang konisch geformtes Befestigungselement (15) dichtend gehalten wird, das an der Filterplatte (3) verspannbar befestigt ist, dadurch gekennzeichnet, daß in dem konisch zulaufenden Bereich (13) der Durchtrittsöffnung der Filterplatte eine Nut (10) zur Aufnahme des Randwulstes (9) der Preßmembran (6) angeordnet ist, und daß der Randwulst (9) der Preßmembran (6) durch die konische Außenfläche des ringförmigen Befestigungselementes (15) in der Nut unter Verspannung gehalten ist.

2. Filterplatte nach Anspruch 1, dadurch gekennzeichnet, daß im Bereich ihrer Mittelebene (11) ein die Nut (10) zur Mitte der Durchtrittsöffnung (4) der Filterplatte (3) hin überragender umlaufender Haltesteg (12) vorgesehen ist, mit dem der Klemmring (15) verspannbar ist.

3. Filterplatte nach Anpruch 1 oder 2, dadurch gekennzeichnet, daß die Kante der Durchtrittsöffnung (4) der Filterplatte (2) im Bereich ihres größten Durchmessers abgerundet ausgebildet ist.

4. Filterplatte nach Anspruch 1, 2 oder 3, aus einem Kunststoff, dadurch gekennzeichnet, daß der Klemmring (15) ebenfalls aus Kunststoff hergestellt und mit mehreren axialen Durchtrittsbohrungen (16) für Spannschrauben (17) versehen ist und daß im Haltesteg (12) der Filterplatte (2) Gewindehülsen (18), vorzugsweise aus Metall, als Gegenelemente zu den Spannschrauben (17) angeordnet sind.

5. Filterplatte nach einem der Ansprüche 1 bis 4, dadurch gekennzeichnet, daß in die Durchtrittsbohrungen (16) im Klemmring (15) an ihrem außenliegenden Ende bei eingesetzter Spannschraube (17) jeweils ein Verschlußstopfen (22) aus einem elastomeren Material eingesetzt ist.

6. Filterplatte nach einem der Ansprüche 1 bis 5, dadurch gekennzeichnet, daß die Wandung der Durchtrittsöffnung (4) und der Klemmring (15) mit einer Schlauchmanschette (30) aus einem elastomeren Material abgedeckt sind, die an beiden Enden mit radial nach außen weisenden Deckflanschen (31) versehen ist, die bis in den Bereich der Filterkammer (5) hineinragen.

7. Filterplatte nach einem der Ansprüche 1 bis 6, dadurch gekennzeichnet, daß das Filtertuch (8) im Bereich der Durchtrittsöffnung (4) mit dem Deckflansch (31) der Schlauchmanschette (30) verbunden ist.

8. Filterplatte nach einem der Ansprüche 1 bis 7, dadurch gekennzeichnet, daß die Deckflansche (31) der Schlauchmanschette (20) auf ihrer Außenfläche mit polsterförmigen Erhöhungen (32) versehen sind, die bei zum Paket zusammengeschobenen Filterplatten (1, 2) jeweils auf der Außenfläche von höckerartigen Erhöhungen (27) von Befestigungsringen (26) für das Filtertuch (8) der benachbarten Filterplatte (1) anliegen, in denen die Durchgangslöcher für deren Befestigungsschrauben (17) angeordnet sind.

9. Filterplatte nach einem der Ansprüche 1 bis 8, dadurch gekennzeichnet, daß der Klemmring (15) für die Preßmembran (6) und/oder der Befestigungsring (26) für das Filtertuch (8) einer membranlosen Filterplatte (1) an der zugehörigen Filterplatte (1, 2) auf einer Zwischenlage (19, 24) aus einem elastomeren Material aufliegt.

## Claims

1. A filter plate for a plate filter press having at least one press membrane (6) covered with filter cloth (8), wherein the filter plate and the press membrane have at least one common through-flow opening (4), wherein the edge of the through-flow opening of the filter plate on the side which carries the press membrane is constructed extending conically towards the mid-plane (11) of the filter plate, and the edge of the through-flow opening of the press membrane is provided with an encircling edge bead (9) which is held sealed by an annular fastening element (15) which is shaped conically on its outer periphery and which is secured to the filter plate (3) so that it can be clamped, characterised in that a groove (10) for receiving the edge bead (9) of the press membrane (6) is disposed in the conically extending region (13) of the through-flow opening of the filter plate, and that the edge bead (9) of the press membrane (6) is held clamped in the groove by the conical outer surface of the annular fastening element (15).

2. A filter plate according to claim 1, characterised in that an encircling holding stay (12), which projects beyond the groove (10) towards the centre of the through-flow opening (4) of the filter plate (3) and by means of which the clamping ring (15) can be clamped, is provided in the region of its mid-plane (11).

3. A filter plate according to claim 1 or 2, characterised in that the edge of the through-flow opening (4) of the filter plate (2) is of rounded-off construction in the region of its largest diameter.

4. A filter plate according to claim 1, 2, or 3, made from a plastic, characterised in that the clamping ring (15) is also manufactured from plastic and is provided with a plurality of axial through-holes (16) for clamping screws (17), and that threaded bushes, preferably made of metal, are disposed in the holding stay (12) of the filter plate (2) as counter elements for the clamping screws (17).

5. A filter plate according to any one of claims 1 to 4, characterised in that a sealing plug (22) made of an elastomeric material is inserted in the external end of each of the through-holes (16) in the clamping ring (15) when the clamping screw (17) is inserted.

6. A filter plate according to any one of claims 1 to 5, characterised in that the walls of the through-flow opening (4) and the clamping ring (15) are covered by a flexible tubular collar (30) made of an elastomeric material, which is provided at both ends with radially outwardly pointing cover flanges (31) which project into the region of the filter chamber (5).

7. A filter plate according to any one of claims 1 to 6, characterised in that the filter cloth (8) is attached to the cover flange (31) of the flexible tubular collar (30) in the region of the through-flow opening (4).

8. A filter plate according to any one of claims 1 to 7, characterised in that the cover flanges (31) of the flexible tubular collar (30) are provided on their outer surfaces with pad-shaped elevations (32), which when the filter plates (1, 2) are pushed together to form the stack are each seated against the outer surface of hump-like elevations (27) of fastening rings (26) for the filter cloth (8) of the adjacent filter plate (1), in which the through-holes for their fastening screws (17) are disposed.

9. A filter plate according to any one of claims 1 to 8, characterised in that the clamping ring (15) for the press membrane (6) and/or the fastening ring (26) for the filter cloth (8) of a filter plate (1) without a membrane on the associated filter plate (1, 2) rests on an intermediate layer (19, 24) of an elastomeric material.

## Revendications

1. Plateau filtrant pour un filtre-presse à plateaux comportant au moins une membrane de presse (6) recouverte d'un tissu filtrant (8), dans le cas duquel le plateau filtrant et la membrane de presse présentent au moins une ouverture de passage commune (4), la bordure de l'ouverture de passage du plateau filtrant étant, du côté portant la membrane de presse, conçue se terminant en cône en direction du plan médian (11) du plateau filtrant, et la bordure de l'ouverture de passage de la membrane de presse étant munie d'un bourrelet de bordure périphérique (9) qui est maintenu de façon étanche par un élément de fixation (15) de forme annulaire, conique à sa périphérie extérieure et fixé, avec possibilité de serrage, contre le plateau filtrant (3), caractérisé par le fait que dans la zone (13) de l'ouverture de passage du plateau filtrant qui se termine en cône est disposée une rainure (10) pour recevoir le bourrelet de bordure (9) de la membrane de presse (6) et par le fait que le bourrelet de bordure (9) de la membrane de presse (6) est maintenu, avec serrage, dans la rainure par la surface extérieure conique de l'élément de fixation annulaire (15).

2. Plateau filtrant selon la revendication 1, caractérisé par le fait que dans la zone de son plan médian (11) est prévue une nervure de maintien périphérique (12) qui dépasse la rainure (1O) en direction du centre de l'ouverture de passage (4) du plateau filtrant (3) et au moyen de laquelle on peut contraindre l'anneau de bridage (15).

3. Plateau filtrant selon la revendication 1 ou 2, caractérisé par le fait que le bord de l'ouverture de passage (4) du plateau filtrant (2) est conçue arrondie dans la zone de son plus grand diamètre.

4. Plateau filtrant selon la revendication 1, 2 ou 3, en plastique, caractérisé par le fait que l'anneau de bridage (15) est également fabriqué en plastique et présente plusieurs perçages traversants axiaux (16) pour les vis de serrage (1O) et que dans la nervure de maintien (12) du plateau filtrant (2) sont disposées des douilles taraudées (18), de préférence en métal, comme contreéléments pour les vis de serrage (17).

5. Plateau filtrant selon l'une des revendications 1 à 4, caractérisé par le fait que dans les perçages traversants (16) prévus dans l'anneau de bridage (15), à chacune de leurs extrémités situées à l'extérieur, la vis de serrage (17) étant en place, est introduit un bouchon d'obturation (22) en un matériau élastomère.

6. Plateau filtrant selon les revendications 1 à 5, caractérisé par le fait que la paroi de l'ouverture de passage (4) et l'anneau de bridage (15) sont recouverts d'une manchette tubulaire souple (3) en un matériau élastomère munie, au deux extrémités, de rabats de recouvrement (31) qui sont orientés radialement vers l'extérieur et pénètrent jusque dans la zone de la chambre de filtration (5).

7. Plateau filtrant selon l'une des revendications 1 à 6, caractérisé par le fait que, dans la zone de l'ouverture de passage (4), le tissu filtrant (8) est relié au rabat de recouvrement (31) de la manchette tubulaire souple (30).

8. Plateau filtrant selon l'une des revendications 1 à 7, caractérisé par le fait que les rabats de recouvrement (31) de la manchette tubulaire souple (30) sont munis, sur leur surface extérieure, de saillies (32) en forme de coussin qui, lorsque les plateaux filtrants (1, 2) sont regroupés sous forme d'un paquet, s'appuient, chacune, sur la surface extérieure de saillies (27) en forme de bosses (27) des anneaux de fixation (26) pour le tissu filtrant (8) du plateau filtrant (1) voisin, saillies dans lesquelles sont disposés les trous traversants pour leur vis de fixation (17).

9. Plateau filtrant selon l'une des revendications 1 à 8, caractérisé par le fait que l'anneau de bridage (15) pour la membrane de presse (6) et/ou l'anneau de fixation (26) pour le tissu filtrant (8) d'un plateau filtrant (1) sans membrane s'appuie contre le plateau filtrant correspondant (1, 2) sur une couche intermédiaire (19, 24) en matériau élastomère.
